(19) Europäisches Patentamt
European Patent Office
Office européen des brevets

(11) **EP 0 795 976 A2**

(12) **EUROPÄISCHE PATENTANMELDUNG**

(43) Veröffentlichungstag:
**17.09.1997 Patentblatt 1997/38**

(51) Int. Cl.⁶: **H04L 1/00**

(21) Anmeldenummer: **96120555.6**

(22) Anmeldetag: **20.12.1996**

(84) Benannte Vertragsstaaten:
**CH DE FR GB IT LI NL SE**

(30) Priorität: **13.03.1996 CH 668/96**

(71) Anmelder: **ASCOM TECH AG**
**CH-3018 Bern (CH)**

(72) Erfinder:
• **Dettmar, Uwe**
  **CH-522 Tögerig (CH)**

• **Wittneben, Armin**
  **CH-5406 Rütlhof (CH)**
• **Liu, Weilin**
  **CH-5442 Fislisbach (CH)**

(74) Vertreter: **Roshardt, Werner Alfred, Dipl.-Phys. et al**
**Keller & Partner**
**Patentanwälte AG**
**Marktgasse 31**
**Postfach**
**3000 Bern 7 (CH)**

(54) **Verfahren zum Empfangen eines nach einem ETS-HIPERLAN-Standard kodierten und modulierten Signals**

(57) Für die nicht-kohärente Demodulation eines gemäss dem ETS-HIPERLAN-Standard erzeugten Signals wird empfängerseitig ein Integrator (10) zum Rückgängigmachen einer differenziellen Vorcodierung erst nach einer BCH-Decodierung (9) angeordnet.

Fig. 3

## Beschreibung

### Stand der Technik

Der sog. European Telecommunications Standard (ETS) definiert die technischen Charakteristiken eines drahtlosen lokalen Hochleistungsnetzwerkes (HIgh PErformance Radio Local Area Network = HIPERLAN). HIPERLAN ist ein kurzreichweitiges Kommunikationssubsystem mit hoher Datenrate (vgl. dazu ETSI 1995, ETS 300 652, UDC: 621 396). Der ETS-HIPERLAN-Standard ist für das Frequenzband 5.15 bis 5.30 GHz vorgesehen.

Der HIPERLAN-Standard definiert exakt die durch Codierung und Modulation bewerkstelligte Abbildung der Daten auf das Sendesignal. Ein Empfänger für ein derart aufgebautes Signal kann die inverse Abbildung durch sequentielles Rückgängigmachen der im Sender zum Erzeugen des Sendesignals vorgenommenen Operationen realisieren. Bei einem Empfänger, der auf kohärenter Demodulation beruht, ist dies bei einem nach dem HIPERLAN-Standard gebildeten Sendesignal weitgehend unproblematisch.

Nicht-kohärente Demodulatoren sind um einiges weniger komplex als kohärente Demodulatoren und wären für HIPERLAN von Vorteil. Allerdings zeigt sich, dass die schrittweise Rückgängigmachung der Codier- und Modulationsstufen beim nichtkohärenten Empfang zu einem fatalen Fehlerverhalten führt.

### Darstellung der Erfindung

Aufgabe der Erfindung ist es, ein Verfahren zum Empfangen eines nach einem ETS-HIPERLAN-Standard codierten und modulierten Signals anzugeben, das mit einer möglichst einfachen Empfängerstruktur auskommt und möglichst eine ähnlich gute Paketfehlerrate wie ein kohärenter Empfänger erreicht.

Die erfindungsgemässe Lösung ist durch die Merkmale des Anspruchs 1 definiert. Die Erfindung beruht auf der Erkenntnis, dass die Codier- und Modulationsschritte beim Empfang nicht in entsprechenden Schritten invertiert werden dürfen. Die differenzielle Vorcodierung darf erst nach dem De-Interleaving und der BCH-Decodierung rückgängig gemacht werden. Bei der Signalübertragung ist die Abfolge der erfindungsrelevanten Schritte nicht „BCH-Codierung - differenzielle Vorcodierung - Invertierung der differenziellen Vorcodierung - Invertierung der BCH-Codierung", sondern „BCH-Codierung - differenzielle Vorcodierung - Invertierung der BCH-Codierung - Invertierung der differenziellen Vorcodierung". (Es versteht sich, dass verschiedene weitere Verarbeitungsschritte vor, zwischen und nach den genannten erfindungsrelevanten Schritten eingeschoben sein können.)

Die erfindungsgemässe Schrittabfolge bringt es mit sich, dass das erste Codewort eines Datenpakets empfängerseitig nicht mehr zwingend ein BCH-Codewort ist. Es gibt nun verschiedene Möglichkeiten, diesem Umstand Rechnung zu tragen. Gemäss einer ersten bevorzugten Ausführungsform wird das erste Codewort von der Fehlerkorrektur ausgeschlossen. (Da der verwendete BCH-Code systematisch ist, werden die die Information enthaltenden ersten 26 Bit ausgegeben und die restlichen 5 Bit einfach gestrichen. Dies ist so für jeden systematischen Code möglich.) Das erste Codewort wird also durch den BCH-Decoder im wesentlichen unverarbeitet durchgelassen.

Eine andere Variante besteht darin, dass das erste Codewort mit einem Soft-Decision-Decoding-Verfahren verarbeitet wird, welches nur gerade das erste Bit des Codewortes ausser acht lässt. Mit dem Soft-Decision-Decoding kann also auch das erste Wort bis zu einem gewissen Grad gegen Fehler geschützt werden. Allerdings ist der Fehlerschutz kleiner als bei den anderen 15 BCH-Codeworten, da die Mindest-Hamming-Distanz nur 2 anstelle von 3 beträgt. Der Rechenaufwand wird bei dieser Decodierung etwas grösser. Ein Beispiel für ein Soft-Decision-Decoding-Verfahren ist ein sog. Erasure-Decoding. Bei diesem wird dasjenige Bit, das bei der Detektion mit der grössten Fehlerwahrscheinlichkeit bzw. Entscheidungsunsicherheit behaftet war, ausgelöscht und durch das zu erwartende ersetzt.

Bei der Integration (zum Rückgängigmachen der differenziellen Vorcodierung) wird zur Initialisierung das letzte Bit einer unmittelbar vorauslaufenden Synchronisationssequenz verwendet.

Eine Schaltungsanordnung zur Durchführung des Verfahrens verfügt somit über einen nicht-kohärenten Demodulator, eine signalflussmässig unmittelbar anschliessende Schaltung zum Durchführen des De-Interleaving und der BCH-Decodierung und erst daran anschliessend über einen Integrator. Der digitale Teil des nicht-kohärenten Demodulators, das De-Interleaving, die BCH-Decodierung und die Integration können in einem einzigen Signalprozessor zusammengefasst sein. Die hardware- und softwaremässige Implementation des erfindungsgemässen Verfahrens bieten dem Fachmann keine besonderen Schwierigkeiten.

Weitere Einzelheiten und Merkmalskombinationen ergeben sich aus der nachfolgenden Detailbeschreibung.

### Kurze Beschreibung der Zeichnungen

Die zur Erläuterung des Ausführungsbeispiels verwendeten Zeichnungen zeigen:

Fig. 1    Die Struktur eines Datenpakets nach dem HIPERLAN-Standard;

Fig. 2    ein Blockschaltbild mit den wesentlichen Codier- und Modulationsschritten gemäss dem HIPERLAN-Standard;

Fig. 3    ein Blockschaltbild eines erfindungsgemässen Empfängers.

Grundsätzlich sind in den Figuren gleiche Teile mit gleichen Bezugszeichen versehen.

**Wege zur Ausführung der Erfindung**

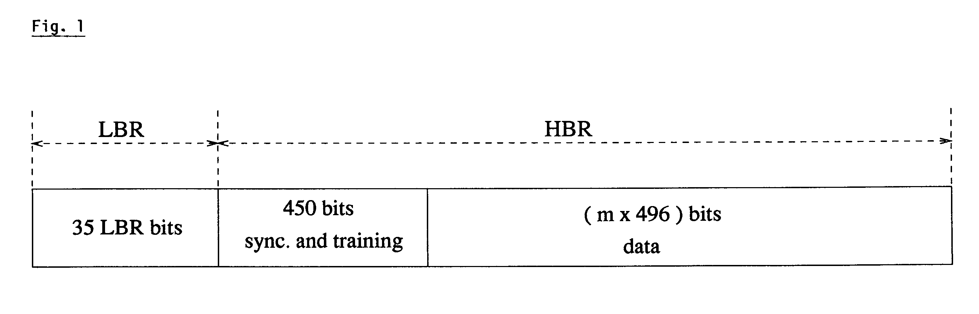

HIPERLAN verwendet eine Burst-Übertragung. Die zu übertragenden Daten werden also zu Datenpaketen zusammengefasst. Fig. 1 zeigt den Inhalt eines solchen Datenpakets. Er wird durch einen LBR- und einen HBR-Teil gebildet (LBR = Low Bit Rate, HBR = High Bit Rate). Der LBR-Teil enthält 35 Bits mit einer Länge von jeweils 680 ns. Der HBR-Teil selbst besteht aus einer Präambel von 450 Bits (für die Empfängersynchronisation und die Kanalschätzung (Training)) und einer wählbaren Anzahl m ($0 < m \leq 47$) von Datenblöcken mit je 496 Bits. Die Bitdauer im HBR-Teil beträgt 42.4 ns (d.h. 1/16 der Bitdauer im LBR-Teil).

Das Modulationsformat für die Daten im LBR-Teil ist FSK (Frequency Shift Keying). Der LBR-Teil enthält die Zieladresse des Pakets. Auf der Basis dieser Zieladresse kann der Empfänger entscheiden, ob er den nachfolgenden HBR-Teil verarbeiten muss oder nicht. Im folgenden wird nicht weiter auf den LBR-Teil eingegangen, da er in keinem zwingenden Zusammenhang mit der Erfindung steht.

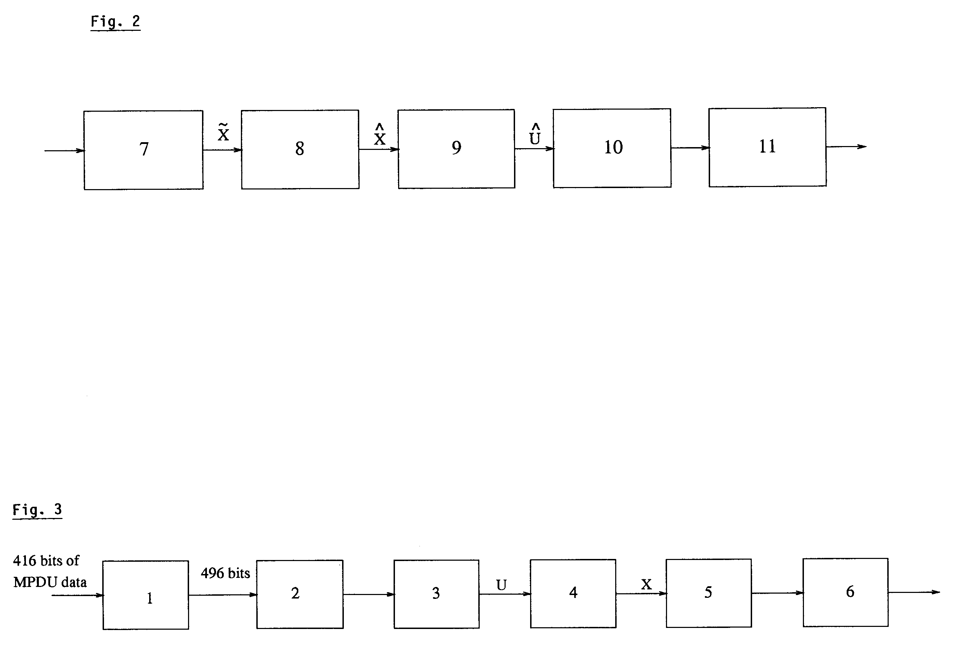

Fig. 2 zeigt ein Blockschaltbild eines Codier- und Modulationsverfahrens, das dem ETS-HIPERLAN-Standard entspricht. Diejenigen Teile, welche die Verarbeitung des LBR-Teils betreffen, sind weggelassen worden. Weiter ist anzumerken, dass das Blockschaltbild nur den sog. Physical Layer darstellt. Darüber befindet sich der MAC-Layer. Von diesem werden die MPDU-Daten (MPDU = MAC-Protocol Data Unit) in Blöcken von 416 Bits übernommen. Jeder solche Block wird in 16 Teilblöcke mit je 26 Bits unterteilt. Die Teilblöcke werden einem systematischen (31, 26, 3) BCH-Code unterworfen (BCH-Codierer 1). Dieser Code hat eine Hamming-Distanz von 3. Die resultierenden 16 BCH-Codeworte (mit einer Länge von je 31 Bits) werden in einem Interleaver 2 verarbeitet. Dabei werden die Codeworte in Spalten einer Matrice geschrieben und zeilenweise ausgelesen.

Im nachfolgenden Toggling-Block 3 werden die Bits paarweise invertiert (d.h. die Bits mit den Indizes 2, 3, 6, 7, 10, 11 etc. werden invertiert, die übrigen werden unverändert beibehalten). Das Toggling hat auf das Fehlerverhalten des Datenübertragungsverfahrens keinen Einfluss und wird deshalb im folgenden nicht mehr erwähnt.

Der differenzielle Vorcodierer 4 führt eine Modulo-2-Addition von zwei aufeinanderfolgenden Bits aus:

$$x(i) = \text{Not}(u(i) \oplus u(i\text{-}1))$$

Anschliessend folgt ein Mapper 5, welcher die unipolaren Daten in bipolare Daten für die GMSK-Modulation transformiert ($0 \rightarrow 1$, $1 \rightarrow -1$). Die beschriebenen Operationen können einfacher wie folgt dargestellt werden:

$$x(i) = (u(i) \oplus u(i\text{-}1)$$

$$0 \rightarrow \quad -1$$
$$1 \rightarrow \quad 1$$

Schliesslich werden die vom Mapper 5 kommenden Symbole dem GMSK-Modulator 6 für die Übertragung auf einer Frequenz von z.B. 5.3 GHz übergeben.

GMSK ist ein Frequenz- oder Phaseninkrement-Modulationsschema, in welchem eine Phasenintegration inhärent enthalten ist. Der HIPERLAN-Standard legt fest, dass Bursts, die nach Demodulation und BCH-Decodierung nicht vollständig fehlerfrei sind, erneut gesendet werden müssen. Ob ein empfangener Burst nach Demodulation und BCH-Decodierung als fehlerfrei betrachtet wird oder nicht, wird durch die anschliessende Decodierung eines CRC-Codes entschieden.

Die differenzielle Vorcodierung kompensiert diese Phasenintegration und konvertiert das Frequenz- (oder Phaseninkrement) Modulationsschema in ein Phasenmodulationsschema. Aus diesem Grund ist das Empfangssignal prädestiniert für die Demodulation mit einem kohärenten Empfänger. Die Decodierung der Daten erfolgt dann im Prinzip durch Aneinanderreihung von invertierenden Blöcken in umgekehrter Reihenfolge (kohärente Demodulation, Toggling, De-Interleaving, BCH-Decodierung, Rückgewinnung der Daten aus dem Codewort).

Die für den kohärenten Empfang beschriebene empfängerseitige Verarbeitung ist jedoch für den nicht-kohärenten Empfänger nicht gangbar. Der Integrator zum Rückgängigmachen der differenziellen Vorcodierung führt zu einer unbegrenzten Fehlerfortpflanzung. Ein einziger Fehler im nicht-kohärenten Demodulator würde dazu führen, dass alle nachfolgenden Bits falsch sind. Die anschliessende BCH-Decodierung wird dann nutzlos. Die Systemperformance und insbesondere die Paketfehlerrate wird inakzeptabel.

Wie aus Fig. 3 ersichtlich ist, werden gemäss der Erfindung bei einem Empfänger mit nicht-kohärentem Demodulator 7 der De-Interleaver 8 und der BCH-Decodierer 9 vor den Integrator 10 gesetzt.
Wenn U(n)

$$U(n) = \begin{pmatrix} u_{1,1}(n) & u_{1,2}(n) & \ldots & u_{1,16}(n) \\ u_{2,1}(n) & u_{2,2}(n) & \ldots & u_{2,16}(n) \\ \ldots\ldots\ldots\ldots\ldots\ldots\ldots\ldots\ldots\ldots\ldots \\ u_{31,1}(n) & u_{31,2}(n) & \ldots & u_{31,16}(n) \end{pmatrix}$$

den n-ten Block ($0 < n \le m$) eines Pakets nach dem Codieren und Interleaven bezeichnet, dann ist jede Spalte von U(n) ein Codewort. Bedingt durch das Interleaving wird der Block U(n) - wie bereits erwähnt - Zeile für Zeile ausgelesen für das nachfolgende Vorcodieren.
Wenn X(n)

$$X(n) = \begin{pmatrix} x_{1,1}(n) & x_{1,2}(n) & \ldots & x_{1,16}(n) \\ x_{2,1}(n) & x_{2,2}(n) & \ldots & x_{2,16}(n) \\ \ldots\ldots\ldots\ldots\ldots\ldots\ldots\ldots\ldots\ldots\ldots \\ x_{31,1}(n) & x_{31,2}(n) & \ldots & x_{31,16}(n) \end{pmatrix}$$

den n-ten Block nach der differenziellen Vorcodierung bezeichnet, dann lässt sich zeigen, dass mit einer Ausnahme jede Spalte X(n) ein BCH-Codewort ist. Die erwähnte einzige Ausnahme betrifft die erste Spalte $x_1(n)$. Diese ist nicht zwingend ein BCH-Codewort. Das erste Bit $x_{1,1}(n)$ hängt nämlich vom letzten Bit des vorangegangenen Bocks ab:

$$x_{1,1}(n) = u_{31,16}(n\text{-}1)\oplus u_{1,1}(n)$$

Die verwendete BCH-Codierung hat eine Hamming-Distanz von 3. Es konnte nun bewiesen werden, dass die verbleibenden 30 Bits( $x_{2,1}(n)$, ... $x_{31,1}(n)$)einen Code mit einer Mindest-Hamming-Distanz von 2 bilden. Dadurch besteht die Möglichkeit, ein Soft-Decision-Decoding-Verfahren auf die genannten 30 Bits anzuwenden.

Es ist zu beachten, dass 15 der insgesamt 16 Spalten von X(n) immer noch BCH-Codeworte geblieben sind. Auf diese Spalten kann also die BCH-Decodierung in an sich bekannter Weise angewendet werden. Das heisst, in 15 der 16 Spalten kann jeweils ein einzelner Fehler korrigiert werden.

Die erste Spalte kann nun entweder direkt an den Ausgang übergeben oder mit einem Soft-Decision-Decoding-Verfahren bearbeitet werden. Das Soft-Decision-Decoding-Verfahren lässt nur das erste Bit der ersten Spalte ausser Betracht. Alle anderen Bits werden geprüft. Die für das Soft-Decision-Decoding benötigte Zuverlässigkeitsinformation kommt vom nicht-kohärenten Demodulator.

Ein einfacher Weg zur Durchführung eines Soft-Decision-Decodings besteht darin, dasjenige Bit ausser acht zu lassen, das mit der grössten Entscheidungsunsicherheit behaftet ist. Danach kann ein sog. Erasure-Decoding angewendet werden, d.h. das unsicherste Bit wird auf der Basis der vorhandenen Codierung rekonstruiert. Aufgrund der erfindungsgemässen Anordnung des Integrators leidet die (für HIPERLAN relevante) Paketfehlerrate nicht unter dem Fehlerfortpflanzungseffekt.

Die Nützlichkeit des Soft-Decision-Decodings hängt stark vom tragbaren Rechenaufwand (bedingt durch die Decodier-Komplexität) und der Verlässlichkeit der Soft-Decision-Decoding-Information ab.

Zusammenfassend ist festzustellen, dass durch die Erfindung eine Vereinfachung eines HIPERLAN-Empfängers in der Demodulationsstufe möglich wird. Anwendbar ist die Erfindung überall dort, wo senderseitig mit dem HIPERLAN-Standard vergleichbare Strukturen vorhanden sind und empfängerseitig ein nicht-kohärenter Demodulator gewünscht ist.

## Patentansprüche

1. Verfahren zum Empfangen eines gemäss ETS-HIPERLAN-Standard codierten und modulierten Signals, dadurch gekennzeichnet, dass das Signal mit einem nicht-kohärenten Demodulator (7) demoduliert wird, und dass eine Integration (10) zum Rückgängigmachen einer senderseitigen differenziellen Vorcodierung erst nach einer BCH-Decodierung (9) durchgeführt wird.

2. Verfahren nach Anspruch 1, dadurch gekennzeichnet, dass bei der BCH-Decodierung (9) ein erstes Codewort eines Datenpakets von der Fehlerkorrektur ausgeschlossen wird.

3. Verfahren nach Anspruch 2, dadurch gekennzeichnet, dass das erste Codewort mit einem Soft-Decision-Decoding-Verfahren decodiert wird, welches nur ein erstes Bit des Codewortes ausser acht lässt.

4. Verfahren nach Anspruch 3, dadurch gekennzeichnet, dass das Soft-Decision-Decoding-Verfahren nach einem Erasure-Decoding-Prinzip arbeitet.

5. Verfahren nach einem der Ansprüche 1 bis 4, dadurch gekennzeichnet, dass bei der Integration (10) ein letztes Bit einer vorauslaufenden Synchronisationssequenz zur Initialisierung verwendet wird.

6. Schaltungsanordnung zur Durchführung des Verfahrens nach Anspruch 1, umfassend einen nicht-kohärenten Demodulator (7), einen BCH-Decodierer (9) und einen signalflussmässig an den BCH-Decodierer (9) anschliessenden Integrator (10) zum Rückgängigmachen einer differenziellen Vorcodierung.

Fig. 1

| LBR | HBR |
|---|---|
| 35 LBR bits | 450 bits sync. and training | ( m x 496 ) bits data |

Fig. 2

Fig. 3